# EUROPEAN PATENT SPECIFICATION

(11) **EP 4 082 870 B1**
(45) Date of publication and mention of the grant of the patent: **16.07.2025**
(21) Application number: 22165923.8
(22) Date of filing: 31.03.2022
(51) Int. Cl.: B61L 27/12, G06Q 50/40, G06Q 10/04

(54) **COORDINATION SYSTEM AND COORDINATION SUPPORT METHOD**
KOORDINATIONSSYSTEM UND KOORDINATIONSUNTERSTÜTZUNGSVERFAHREN
SYSTÈME DE COORDINATION ET PROCÉDÉ DE SUPPORT DE COORDINATION

(30) Priority: 28.04.2021 JP 2021075691
(43) Date of publication of application: 02.11.2022
(73) Proprietor: Hitachi, Ltd., Tokyo 100-8280 (JP)
(72) Inventor: MOCHIZUKI, Tomoyuki, Tokyo, 100-8280 (JP); MINAKAWA, Tsuyoshi, Tokyo, 100-8280 (JP); YONEHARA, Miki, Tokyo, 100-8280 (JP); MAYA, Yuzuru, Tokyo, 100-8280 (JP)
(74) Representative: Mewburn Ellis LLP

(56) References cited:
- GB-A- 2 508 508
- JP-A- 2012 111 375
- SPARING DANIEL ET AL: "Identifying effective guaranteed connections in a multimodal public transport network", PUBLIC TRANSPORT, SPRINGER BERLIN HEIDELBERG, BERLIN/HEIDELBERG, vol. 5, no. 1, 16 July 2013 (2013-07-16), pages 79 - 94, XP035302688, ISSN: 1866-749X, [retrieved on 20130716], DOI: 10.1007/S12469-013-0068-6

## Description

### BACKGROUND OF THE INVENTION

This invention relates to a coordination system for promoting coordination among transportations.

Coordination among a plurality of transportations, such as railroads and buses, is demanded. For example, when departure of a bus that is a connection from a delayed train is delayed, convenience of passengers who plan to transfer to the bus is improved, and overcrowding with stranded passengers at a train station can be eased.

The background art in this technical field includes the following related art. In JP 2012-111375 A, there is described a last-train connection prediction apparatus, which includes a last train connection basic table indicating, in connection of a last train between one of first trains managed by a first train traffic control system and one of second trains managed by a second train traffic control system, which of the first trains and which of the second trains have a connecting train-connected train relationship, and which is configured to: search, when a delayed train is found among the first trains and the second trains, the last-train connection basic table for a connecting train or a connected train of the delayed train; generate last-train connection determination predicted operation diagram information for having the found connecting train or connected train stand by at a connection station so that the found connecting train or connected train and the delayed train can be connected; and transmit the last-train connection determination predicted operation diagram information to one of the first train traffic control system and the second train traffic control system that manages the found connecting train or connected train. In GB2508508A, there is described a timetable replanning apparatus for managing the operation of vehicles and performing timetable replanning. In Sparing Daniel et al. (DOI: 10.1007/S12469-013-0068-6), there is described a method of identifying passenger transfers which are vulnerable to delays.

### SUMMARY OF THE INVENTION

The background art described above is about smooth determination of a train operation diagram regarding connection of a last train. However, overcrowding with stranded passengers at a station is required to be eased at times other than around the time of last trains as well, and adjustment among a plurality of transportations is required. It is also required to propose a plan which is easy for a business operator of transportation that is a connection from transportation run by another entity to adopt. In the background art described above, however, a possibility of a proposal of being adopted by the business operator is not considered.

An object of this invention is to achieve a coordination system for proposing a plan which is easy for a business operator of transportation that is a connection from transportation run by another entity to adopt.

The invention disclosed in this application is outlined as follows. There is provided a coordination system for creating a proposal that promotes coordination among a plurality of transportations, the coordination system comprising: an arithmetic device configured to execute given processing; and a storage device accessible to the arithmetic device, the storage device being configured to store, for every one of proposals proposing to delay departure of one of the plurality of transportations, a delaying time of the one of the proposals, an amount of increase in passenger count brought about by delaying the departure in accordance with the one of the proposals, and information on whether the one of the proposals has been accepted, in association with one another, the arithmetic device being configured to: group the proposals by operation and by stop into groups; and generate, for each of the groups, a model in which delaying times of the proposals proposing to delay departure of some of the plurality of transportations and amounts of increase in passenger count brought about by delaying the departure in accordance with the proposals are explanatory variables, and probabilities of acceptance of the proposals are objective variables, create a plurality of connection waiting time plans for connection from first transportation to second transportation, estimate, for every one of the plurality of created connection waiting time plans, a passenger count of the second transportation, calculate, with use of the model, a probability at which the one of the plurality of connection waiting time plans is accepted, calculate, for every one of the plurality of connection waiting time plans, an expectation value by multiplying the probability at which the one of the plurality of connection waiting time plans is accepted by an amount of increase in passenger count of the second transportation, select one of the plurality of connection waiting time plans that has the largest expectation value; and transmit a proposal of the selected one of the plurality of connection waiting time plans to a traffic control system.

According to the at least one aspect of this invention, a transport efficiency can be improved. Problems, configurations, and effects other than those described above are made clear based on the following description of at least one embodiment of this invention. Further aspects of the invention are defined by the claims.

### BRIEF DESCRIPTION OF THE DRAWINGS

FIG. 1 is a block diagram for illustrating a configuration of the operation coordination system according to the at least one embodiment of this invention.
FIG. 2 is a route map diagram used in the description of the at least one embodiment.
FIG. 3 is a diagram for illustrating a configuration example of the operation diagram information.
FIG. 4 is a diagram for illustrating a configuration example of the travel demands information.
FIG. 5 is a diagram for illustrating a configuration example of the business operator model.
FIG. 6 is a diagram for illustrating a configuration example of the recommendation response result.
FIG. 7 is a flow chart of processing executed by the business operator model generation program.
FIG. 8 is a flow chart of processing executed by the coordination recommendation generation program.
FIG. 9 is a diagram for illustrating an example of the recommendation screen 900 to be displayed in the bus traffic control system.
FIG. 10 is a diagram for illustrating an example of a passenger guidance screen.

### DETAILED DESCRIPTION OF THE PREFERRED EMBODIMENTS

An outline of an operation coordination system 1 according to at least one embodiment of this invention is described first. A business operator model 153 is created with the use of response results of a transportation business operator in response to past proposals. Transportation that is a connection is then extracted, and a connection waiting time plan suggesting an amount of time by which a departure time of the transportation that is a connection is to be delayed is created. The business operator model 153 is then referred to, to thereby calculate an expectation value of the created connection waiting time plan. A plan highly likely to be accepted by the transportation business operator is thus proposed.

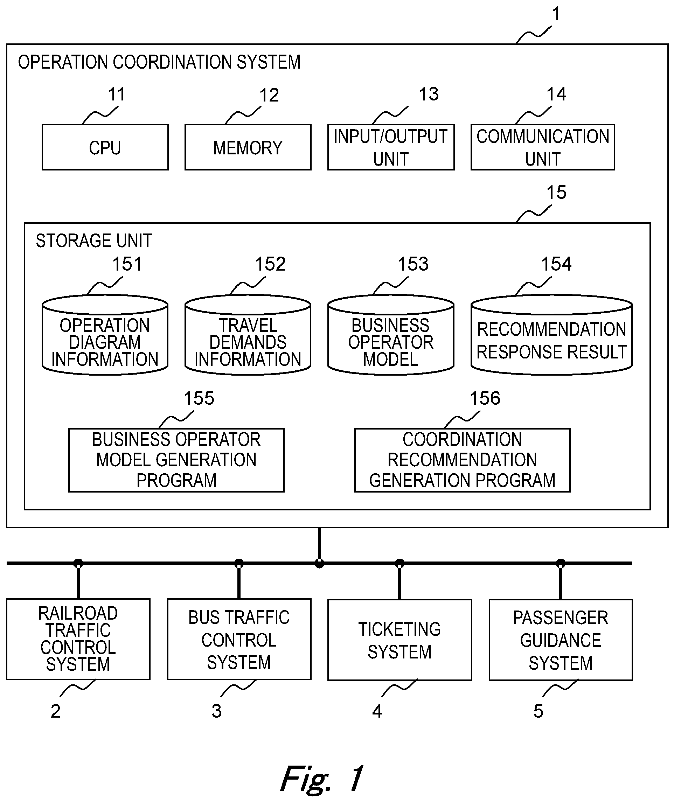

FIG. 1 is a block diagram for illustrating a configuration of the operation coordination system 1 according to the at least one embodiment of this invention.

The operation coordination system 1 according to the at least one embodiment is configured from a computer including a processor (CPU) 11, a memory 12, an input/output unit 13, a communication unit 14, and a storage unit 15.

The processor 11 is an arithmetic device for executing programs stored in the memory 12. The processor 11 executes various programs (a business operator model generation program 155, a coordination recommendation generation program 156, and others), to thereby implement function modules of the operation coordination system 1. Part of processing carried out by the processor 11 by executing programs may be executed by another arithmetic device (for example, an ASIC, an FPGA, or a similar piece of hardware).

The memory 12 includes a ROM, which is a non-volatile storage element, and a RAM, which is a volatile storage element. The ROM stores an unchanging program (for example, BIOS) among others. The RAM is a dynamic random access memory (DRAM) or a similar high-speed and volatile storage element, and temporality stores a program executed by the processor 11 and data used when the program is executed.

The input/output unit 13 is an interface through which input from an operator is received by way of a keyboard, a mouse, or another input device coupled to the input/output unit 13, and through which a result of executing a program is output, by way of a display device, a printer, or another output device coupled to the input/output unit 13, in a format visibly recognizable to the operator. The input/output unit 13 may include an interface (for example, a USB) through which data is transmitted and received in accordance with a given protocol. An input/output unit may be provided by a user terminal coupled to the operation coordination system 1 via a network. In this case, the operation coordination system 1 may have functions of a Web server, and the operation coordination system 1 may be accessed by a Web browser of the user terminal in accordance with a given protocol (for example, http).

The communication unit 14 is a network interface device for controlling communication to and from other system (for example, a railroad traffic control system 2, a bus traffic control system 3, a ticketing system 4, and a passenger guidance system 5) in accordance with a given protocol.

The storage unit 15 is a large-capacity and non-volatile storage device, such as a magnetic storage device (an HDD) or a flash memory (an SSD). The storage unit 15 stores data (for example, operation diagram information 151, travel demands information 152, the business operator model 153, and a recommendation response result 154) used by the processor 11 when the processor 11 executes programs, and the programs (for example, the coordination recommendation generation program 156 and the business operator model generation program 155) executed by the processor 11. In other words, the programs are read out of the storage unit 15, loaded onto the memory 12, and executed by the processor 11, to thereby implement functions of the operation coordination system 1.

The programs to be executed by the processor 11 are provided to the operation coordination system 1 via a removable medium (such as a CD-ROM or a flash memory) or the network, and are stored in a non-volatile and non-transitory storage medium of the storage unit 15. Therefore, the operation coordination system 1 may include an interface which reads out data from a removable medium.

The operation coordination system 1 is a computer system constructed from physically one computer or from a plurality of computers constructed logically or physically, or may operate on a virtual machine constructed from a plurality of physical computer resources. For example, the coordination recommendation generation program 156 and the business operator model generation program 155 may operate on a physical or logical computer separately provided for each thereof, or a plurality of programs of those may be combined to operate on one physical or logical computer.

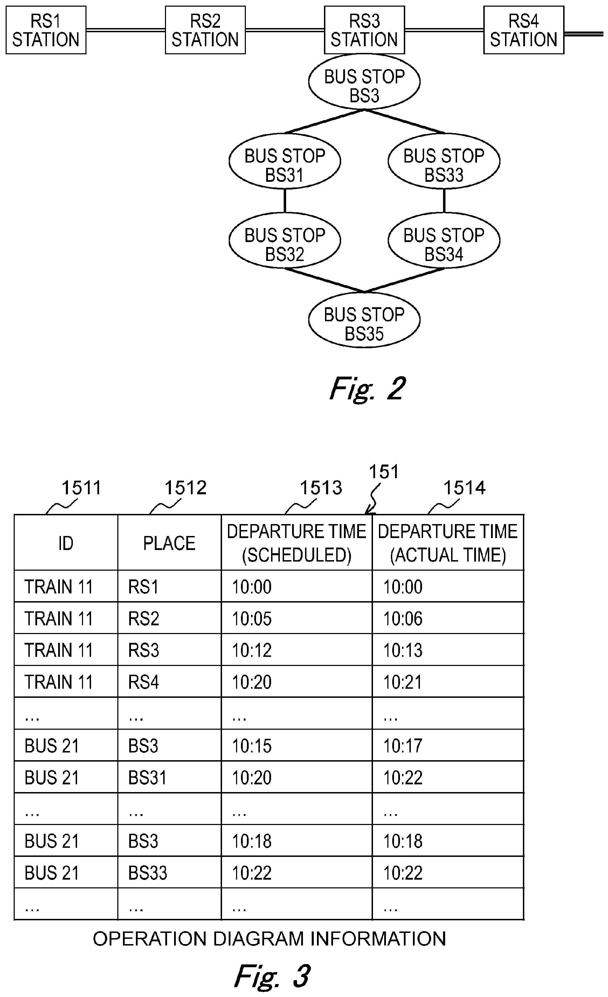

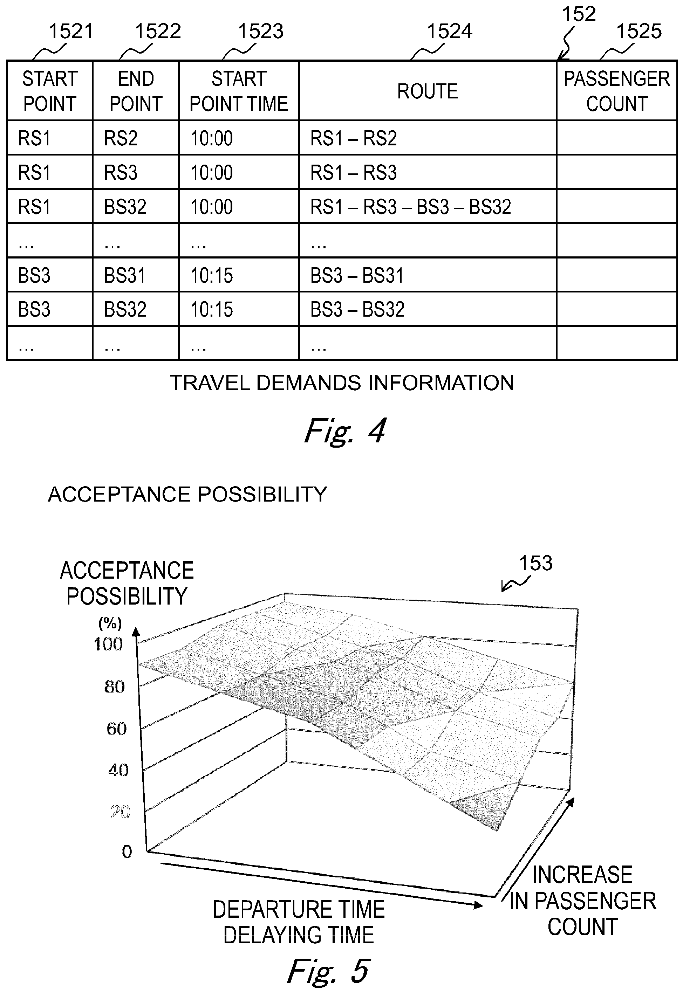

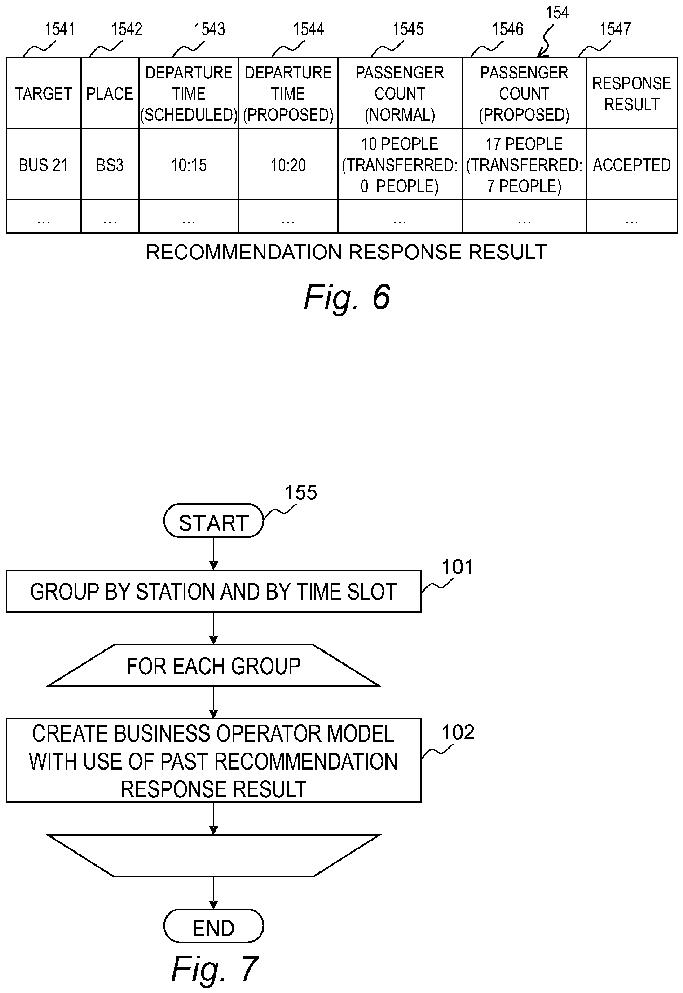

The operation diagram information 151 is information created by a railroad business operator on train operation times and information created by a public bus business operator on bus operation times, and details thereof are described later with reference to FIG. 3. The travel demands information 152 is information on history of travel of passengers by a train or a bus, and details thereof are described later with reference to FIG. 4. The business operator model 153 is a model indicating a possibility at which delaying of a departure time of a train or a bus is accepted by a railroad business operator of the train or a public bus business operator of the bus, and details thereof are described later with reference to FIG. 5. The recommendation response result 154 is information on contents of a proposal by the operation coordination system 1 and contents of a response from a railroad business operator or a bus business operator, and details thereof are described later with reference to FIG. 6.

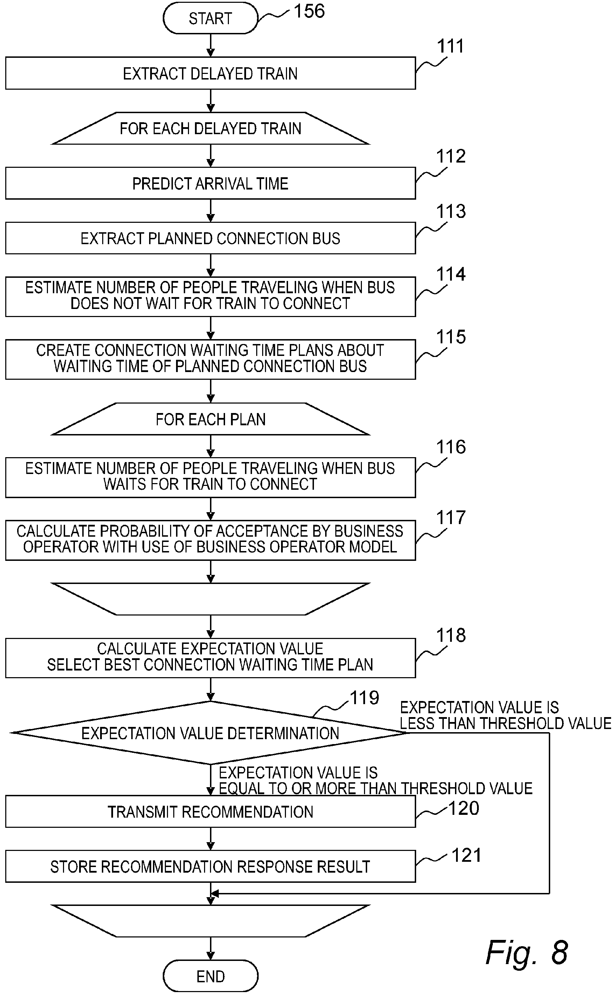

The business operator model generation program 155 is a program for creating the business operator model 153 with the use of the recommendation response result 154, and details thereof are described later with reference to FIG. 7. The coordination recommendation generation program 156 is a program for creating a proposal about an amount of time by which a departure time is to be delayed to a railroad business operator or a public bus business operator, and includes an operation simulator for predicting an operation diagram of a train or a bus and a human flow simulator for predicting the number of passengers of a train or a bus. Details of the coordination recommendation generation program 156 are described later with reference to FIG. 8.

The railroad traffic control system 2 is a computer system to be used by a railroad business operator to control railroad traffic. The bus traffic control system 3 is a computer system to be used by a public bus business operator to control public bus traffic. The ticketing system 4 is a computer system with which a railroad business operator or a public bus business operator manages payment of fares by passengers, and collects, for example, entrance/exit data of an entrance gate machine and boarding/disembarking data of a fare box. The passenger guidance system 5 is a computer system for guiding passengers at a railroad station or a bus stop, and displays, for example, operation information acquired from the railroad traffic control system 2 or the bus traffic control system 3 on a destination guidance display installed at a station, a guidance display at a bus stop, or a terminal of a passenger.

FIG. 2 is a route map diagram used in the description of the at least one embodiment.

The route map diagram of FIG. 2 includes a railroad line starting from a station RS1 and running through a station RS2, a station RS3, and a station RS4. There are also two bus lines from a bus stop BS3, which is closest to the station RS3, to a bus stop BS35, with one bus line running through a bus stop BS31 and a bus stop BS32, and another bus line running through a bus stop BS33 and a bus stop BS34. A person who plans to travel from the bus stop BS3 to the bus stop BS35 can thus use whichever of the two routes described above. Transfer from a train to a bus and transfer from a bus to a train are possible between the station RS3 and the bus stop BS3.

FIG. 3 is a diagram for illustrating a configuration example of the operation diagram information 151.

The operation diagram information 151 is information created by a railroad business operator on train operation times and information created by a public bus business operator on bus operation times. A record of the operation diagram information 151 includes an operation ID 1511, a place 1512, a departure time (scheduled) 1513, and a departure time (actual time) 1514, and is created for each train, for each bus, and for each stop. The operation ID 1511 is unique identification information of a train or a bus. The place 1512 is identification information of a place (a station or a bus stop) from which the train or the bus departs. The departure time (scheduled) 1513 is a scheduled departure time (scheduled operation diagram) of the train or the bus, and the departure time (actual time) 1514 is an actual departure time (actual operation diagram) of the train or the bus. The operation diagram information 151 is acquired from the railroad traffic control system 2 and the bus traffic control system 3.

FIG. 4 is a diagram for illustrating a configuration example of the travel demands information 152.

A record of the travel demands information 152 includes a start point 1521, an end point 1522, a start point time 1523, a route 1524, and a passenger count 1525, and is a record created for each combination of a start point and an end point about history of passengers' travel by train or by bus. The start point 1521 is identification information of a station or a bus stop that is a start point of travel, and the end point 1522 is identification information of a station or a bus stop that is an end point of the travel. The start point time 1523 is a time at which departure from the start point has taken place. In the travel demands information 152, travel via a train ride or a bus ride is recorded, and the start point time is accordingly a departure time of the train or the bus used for the travel. The route 1524 is identification information of stations and bus stops through which the passengers have traveled between the start point 1521 and the end point 1522. The travel demands information 152 can be generated from records collected by the ticketing system 4 about boarding/disembarking of passengers.

FIG. 5 is a diagram for illustrating a configuration example of the business operator model 153.

The business operator model 153 is a model indicating a possibility at which delaying of a departure time of a train or a bus is accepted by a railroad business operator of the train or a public bus business operator of the bus because of an increased number of passengers. The business operator model 153 uses a departure time delaying time and an increase in passenger count as explanatory variables, and an acceptance possibility as an objective variable, and is a model designed so that, as shown in the graph, the acceptance possibility drops when the departure time delaying time increases, and rises when the increase in passenger count becomes larger.

FIG. 6 is a diagram for illustrating a configuration example of the recommendation response result 154.

A record of the recommendation response result 154 includes a target 1541, a place 1542, a departure time (scheduled) 1543, a departure time (proposed) 1544, a passenger count (normal) 1545, a passenger count (proposed) 1546, and a response result 1547, and is created for each proposal from the operation coordination system 1 to a railroad business operator or a bus business operator. The target 1541 is identification information of a train or a bus for which a departure time has been changed by the proposal. The place 1542 is identification information of a station or a bus stop at which the departure time has been changed by the proposal. The departure time (scheduled) 1543 is a scheduled departure time prior to a change by the proposal. The departure time (proposed) 1544 is a departure time after the change by the proposal. The passenger count (normal) 1545 is a predicted value of the number of passengers on the train or the bus prior to the change of the departure time by the proposal. The passenger count (proposed) 1546 is a predicted value of the number of passengers on the train or the bus after the change of the departure time by the proposal. The response result 1547 is information indicating whether the proposal has been accepted by the railroad business operator or the public bus business operator.

The recommendation response result 154 shown in the table indicates that a public bus business operator has accepted a proposal of delaying a departure time of a bus 21 at the bus stop BS3 by 5 minutes and consequently increasing the number of passengers by 7 people.

FIG. 7 is a flow chart of processing executed by the business operator model generation program 155.

The processor 11 groups pieces of data recorded in the recommendation response result 154 by station or bus stop, and by time slot (Step 101).

The processor 11 then uses the grouped pieces of data of the recommendation response result 154 to create the business operator model 153 for each group (Step 102). The business operator model 153 may be generated by, for example, learning a neural network with the use of teacher data in which the departure time delaying time and the increase in passenger count are explanatory variables and a quotient of the number of accepted proposals divided by the number of proposals is an objective variable. The business operator model 153 may be generated also with the use of a linear regression model (logistic regression model or the like), a non-linear model (a random forest, a gradient boosting decision tree, or the like), or others, with the departure time delaying time and the increase in passenger count as explanatory variables and a quotient of the number of accepted proposals divided by the number of proposals as an objective variable.

FIG. 8 is a flow chart of processing executed by the coordination recommendation generation program 156. In FIG. 8, a case of transfer from a train to a bus is described, but the processing is also applicable to transfer from a train to another train, transfer from a bus to another bus, and transfer from a bus to a train. The coordination recommendation generation program 156 monitors actual operation diagrams provided from the railroad traffic control system 2 and the bus traffic control system 3, and is executed when a delay equal to or more than a given threshold value is detected.

The processor 11 first extracts a delayed train from the operation diagram information 151 (Step 111).

Subsequently, the processing steps of from Step 112 to Step 121 are executed for each delayed train. In Step 112, the processor 11 uses the operation simulator to predict a time of arrival of the delayed train at a station.

The processor 11 next refers to the operation diagram information 151 to extract a connection bus to be connected to, based on a time difference between the train and the bus in the scheduled operation diagram (Step 113). For example, with respect to an interchange train station and a transfer bus stop, a scheduled arrival time at which the train is to arrive in a case in which the train is not delayed, and transfer times determined for the transfer places are found out and used to extract a planned connection bus departing between a time point at which the determined transfer times elapse since the scheduled arrival time and a time point at which a limit transfer time elapses since the scheduled arrival time. The connection bus may be extracted based on the number of past transfer passengers by referring to the travel demands information 152.

The processor 11 next estimates the number of people traveling when the planned connection bus does not wait for the train to connect (Step 114). For example, the number of passengers expected to ride the planned connection bus is estimated by the human flow simulator with the use of the scheduled operation diagram of the operation diagram information 151 and the travel demands information 152.

The processor 11 next creates a plurality of connection waiting time plans for the planned connection bus (Step 115). The plurality of connection waiting time plans are created, for example, at intervals of 1 minute or other intervals from a 1-minute-long wait to a 5-minute-long wait. In other words, the number of connection waiting time plans to be created is determined by the time interval and the maximum waiting time. When there are a plurality of planned connection buses, the plurality of connection waiting time plans are created for each planned connection bus.

The processing steps of Step 116 and Step 117 are then executed for each connection waiting time plan. In Step 116, the processor 11 estimates the number of traveling people for each connection waiting time plan (Step 116). For example, the number of people expected to ride the planned connection bus which has waited for the train to connect is estimated by, as in Step 114, the human flow simulator with the use of the connection waiting time plan and the travel demands information 152. When there are a plurality of routes to the destination, the number of people expected to ride is estimated for each connection waiting time plan with respect to each route. For example, in a case of travel from the bus stop BS3 to the bus stop BS35, the number of people expected to ride is estimated for each of two routes, which are a route running through the bus stop BS31 and the bus stop BS32, and a route running through the bus stop BS33 and the bus stop BS34.

The processor 11 next uses the business operator model 153 to calculate a probability at which this connection waiting time plan is accepted by the public bus operator (Step 117).

After the calculation of the probability of acceptance is finished for every connection waiting time plan, the processor 11 calculates an expectation value for each connection waiting time plan, and selects a connection waiting time plan that has the largest calculated expectation value (Step 118). According to the invention, a value obtained by multiplying the probability of acceptance by an amount of increase in the number of people expected to ride is calculated as the expectation value. When there are a plurality of routes to the destination, a value obtained by multiplying the probability of acceptance by an amount of increase in the number of people expected to ride is calculated for each route, and a sum of the calculated values of all routes is obtained as the expectation value.

Next, the expectation value of the selected connection waiting time plan is compared to a given threshold value (Step 119). When the calculated expectation value is less than the given threshold value, the possibility of the public bus business operator accepting the plan is small, and the process accordingly proceeds to processing of the next delayed train within the loop for delayed trains, without proposing the plan to the public bus business operator. When the calculated expectation value is equal to or more than the given threshold value, on the other hand, the public bus business operator accepting the proposal is a possibility, and the proposal of delaying the departure time is transmitted to the bus traffic control system 3 (Step 120).

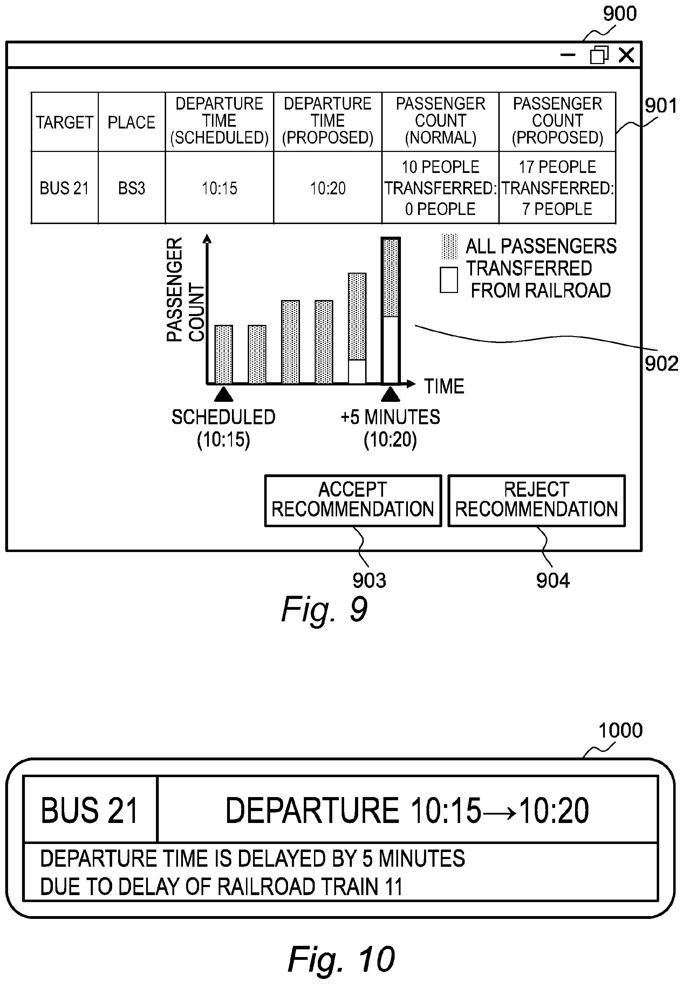

The public bus business operator operates the bus traffic control system 3 to view the proposal (a recommendation screen 900 illustrated in FIG. 9) transmitted from the operation coordination system 1, determines whether to accept the proposal, and inputs whether the proposal is accepted. The bus traffic control system 3 transmits the input acceptance/rejection to the operation coordination system 1. The operation coordination system 1 stores the acceptance/rejection transmitted from the bus traffic control system 3 in the recommendation response result 154 (Step 121).

The description given above is about a mode in which the coordination recommendation generation program 156 is executed when a train or a bus is delayed. The coordination recommendation generation program 156, however, may be used to obtain information for creating a new operation diagram and verifying convenience of transfer between transportations.

FIG. 9 is a diagram for illustrating an example of the recommendation screen 900 to be displayed in the bus traffic control system 3. Although FIG. 9 is an illustration of an example of the recommendation screen to be displayed in the bus traffic control system 3, a proposal about delaying a train departure time is similarly displayed in the railroad traffic control system 2 as well. The recommendation screen 900 may also be displayed on a terminal coupled to the operation coordination system 1, separately from the bus traffic control system 3 and the railroad traffic control system 2.

The recommendation screen 900 illustrated in FIG. 9 includes a proposal display area 901 in which contents of a proposal are displayed in numerical values, a passenger count area 902 in which an illustration of how the passenger count changes depending on the departure time delaying time is displayed, and buttons 903 and 904 to be used by the public bus business operator to input a result.

Data displayed in the proposal display area 901 includes identification information of a bus that is a target of delaying of a departure time, identification information of a place at which the departure time is to be delayed, a departure time (scheduled), a departure time (proposed), a passenger count (normal), and a passenger count (proposed). In the illustrated proposal, passengers increase by 7 people when the departure time of the bus 21 at the bus stop BS3 is delayed by 5 minutes.

The passenger count area 902 displays a change in passenger count for each departure time delaying time in a graph format. It is recommended to design the screen so that an act of selecting a departure time delaying time in the passenger count area 902 causes a change of data displayed in the proposal display area 901. It is understood from the passenger count area 902 that the passenger count increases when the departure time delaying time increases. A delay time that is an increased departure time delaying time but causes only a small change in passenger count can be found out from the passenger count area 902.

A traffic control manager of the public bus business operator operates the "accept recommendation" button 903 when the public bus business operator accepts the proposal displayed on the recommendation screen 900, and operates the "reject recommendation" button 904 when the public bus business operator does not accept the proposal. The "accept recommendation" button 903 may be provided alone. In this case, the operation of rejecting a recommendation is omitted and, when the operation of accepting a recommendation is not performed within a given time, the bus traffic control system 3 automatically rejects the proposal, and notifies the rejection of the proposal to the operation coordination system 1. The "reject recommendation" button 904 may be provided alone. In this case, the operation of accepting a recommendation is omitted and, when the operation of rejecting a recommendation is not performed within a given time, the bus traffic control system 3 automatically accepts the proposal, and updates the operation diagram.

FIG. 10 is a diagram for illustrating an example of a passenger guidance screen 1000.

When the traffic control manager of the public bus business operator operates the "accept recommendation" button 903 of the recommendation screen 900, the operation diagram of the bus traffic control system 3 is updated, and a change to the operation diagram is notified to a driver. The bus traffic control system 3 also transmits information about the delay of the departure time to the passenger guidance system 5. The passenger guidance system 5 displays the information about the delay of the departure time on the guidance displays at bus stops. For example, the passenger guidance screen 1000 illustrated in FIG. 10 displays identification information of the bus that is a target of delaying of the departure time, the departure time before being delayed, the delayed departure time, and a reason for delaying the departure time. The passenger guidance system 5 may display the information illustrated in FIG. 10 on terminals of passengers.

As described above, according to the operation coordination system 1 of the at least one embodiment, a plan highly likely to be accepted by a transportation business operator can be proposed, and smooth transfer can be provided to passengers. The transportation business operator can therefore efficiently transport passengers and reduce operation in which few passengers are transported. For passengers, convenience is improved by smooth transfer between transportations, and quick arrival at a destination is achieved. The smooth transfer also prevents passengers from being stranded, to thereby ease overcrowding at a station.

This invention is not limited to the above-described embodiments but includes various modifications. The above-described embodiments are explained in details for better understanding of this invention and are not limited to those including all the configurations described above. The scope of the invention is defined by the appended claims.

The above-described configurations, functions, processing modules, and processing means, for all or a part of them, may be implemented by hardware: for example, by designing an integrated circuit, and may be implemented by software, which means that a processor interprets and executes programs providing the functions.

The information of programs, tables, and files to implement the functions may be stored in a storage device such as a memory, a hard disk drive, or an SSD (a Solid State Drive), or a storage medium such as an IC card, or an SD card.

The drawings illustrate control lines and information lines as considered necessary for explanation but do not illustrate all control lines or information lines in the products. It can be considered that almost of all components are actually interconnected.

## Claims

1. A coordination system for creating a proposal that promotes coordination among a plurality of transportations, the coordination system comprising:
an arithmetic device (11) configured to execute given processing; and
a storage device (15) accessible to the arithmetic device,
the storage device being configured to store, for every one of proposals proposing to delay departure of one of the plurality of transportations, a delaying time of the one of the proposals, an amount of increase in passenger count brought about by delaying the departure in accordance with the one of the proposals, and information on whether the one of the proposals has been accepted, in association with one another,
the arithmetic device being configured to:
group the proposals by operation and by stop into groups;
generate, for each of the groups, a model in which delaying times of the proposals proposing to delay departure of some of the plurality of transportations and amounts of increase in passenger count brought about by delaying the departure in accordance with the proposals are explanatory variables, and probabilities of acceptance of the proposals are objective variables;
**characterised in that** the arithmetic device is configured to:
create a plurality of connection waiting time plans for connection from first transportation to second transportation;
estimate, for every one of the plurality of created connection waiting time plans, a passenger count of the second transportation;
calculate, with use of the model, a probability at which the one of the plurality of connection waiting time plans is accepted;
calculate, for every one of the plurality of connection waiting time plans, an expectation value by multiplying the probability at which the one of the plurality of connection waiting time plans is accepted by an amount of increase in passenger count of the second transportation;
select one of the plurality of connection waiting time plans that has the largest calculated expectation value; and
transmit a proposal of the selected one of the plurality of connection waiting time plans to a traffic control system.

2. The coordination system according to claim 1, wherein the arithmetic device is configured to:
predict a time at which a delayed operation of the first transportation arrives at a stop;
extract, based on a time difference between a scheduled operation diagram of the first transportation and a scheduled operation diagram of the second transportation, an operation of the second transportation to connect to; and
estimate a passenger count for a case in which the extracted operation of the second transportation does not wait for the delayed operation of the first transportation to connect.

3. The coordination system according to claim 1, wherein the arithmetic device is configured to calculate, in a case where a plurality of routes for the second transportation exist, an expectation value by performing, for each of the plurality of routes, multiplication in which the probability of acceptance of the one of the proposals is multiplied by the amount of increase in passenger count of the second transportation, and summing up values obtained through the multiplication for all of the plurality of routes.

4. A coordination support method for creating a proposal that promotes coordination among a plurality of transportations by a coordination system,
the coordination system including: an arithmetic device configured to execute given processing; and a storage device accessible to the arithmetic device,
the storage device being configured to store, for every one of proposals proposing to delay departure of one of the plurality of transportations, a delaying time of the one of the proposals, an amount of increase in passenger count brought about by delaying the departure in accordance with the one of the proposals, and information on whether the one of the proposals has been accepted, in association with one another,
the coordination support method comprising the steps of:
grouping, by the arithmetic device, the proposals by operation and by stop into groups;
generating, by the arithmetic device, for each of the groups, a model in which delaying times of the proposals proposing to delay departure of some of the plurality of transportations and amounts of increase in passenger count brought about by delaying the departure in accordance with the proposals are explanatory variables, and probabilities of acceptance of the proposals are objective variables;
**characterised in** support method comprises the steps of:
creating, by the arithmetic device, a plurality of connection waiting time plans for connection from first transportation to second transportation;
estimating, by the arithmetic device, for every one of the plurality of created connection waiting time plans, a passenger count of the second transportation; and
calculating, by the arithmetic device, with use of the model, a probability at which the one of the plurality of connection waiting time plans is accepted.
calculating, by the arithmetic device, for every one of the plurality of connection waiting time plans, an expectation value by multiplying the probability at which the one of the plurality of connection waiting time plans is accepted by an amount of increase in passenger count of the second transportation;
selecting, by the arithmetic device, one of the plurality of connection waiting time plans that has the largest calculated expectation value; and
transmitting, by the arithmetic device, a proposal of the selected one of the plurality of connection waiting time plans to a traffic control system.

5. The coordination support method according to claim 4, further comprising the steps of:
predicting, by the arithmetic device, a time at which a delayed operation of the first transportation arrives at a stop;
extracting, by the arithmetic device, based on a time difference between a scheduled operation diagram of the first transportation and a scheduled operation diagram of the second transportation, an operation of the second transportation to connect to; and
estimating, by the arithmetic device, a passenger count for a case in which the extracted operation of the second transportation does not wait for the delayed operation of the first transportation to connect.

6. The coordination support method according to claim 4, further comprising the step of calculating, by the arithmetic device, when a plurality of routes for the second transportation exist, an expectation value by performing, for each of the plurality of routes, multiplication in which the probability of acceptance of the one of the proposals is multiplied by the amount of increase in passenger count of the second transportation, and summing up values obtained through the multiplication for all of the plurality of routes.

## Patentansprüche

1. Koordinierungssystem zum Erzeugen eines Vorschlags, der die Koordinierung einer Vielzahl von Beförderungen fördert, wobei das Koordinierungssystem Folgendes umfasst:
eine Arithmetikvorrichtung (11), die ausgelegt ist, um eine vorgegebene Verarbeitung auszuführen; und
eine Speichervorrichtung (15), auf welche die Arithmetikvorrichtung zugreifen kann,
wobei die Speichervorrichtung ausgelegt ist, um für jeden von Vorschlägen, die eine Verzögerung der Abfahrt eines der Vielzahl von Beförderungen vorschlagen, eine Verzögerungszeit von dem einem der Vorschläge, ein Erhöhungsausmaß der Passagierzahl, das durch die Verzögerung der Abfahrt gemäß dem einen der Vorschläge erwirkt wird, und Informationen darüber, ob der eine der Vorschläge angenommen wurde, in Verbindung miteinander zu speichern,
wobei die Arithmetikvorrichtung ausgelegt ist, um:
die Vorschläge durch Betrieb und Haltestelle in Gruppen zusammenzufassen;
für jede der Gruppen ein Modell zu erzeugen, in dem Verzögerungszeiten der Vorschläge, die eine Verzögerung der Abfahrt einiger der Vielzahl von Beförderungen vorschlagen, und durch eine Verzögerung der Abfahrt gemäß den Vorschlägen erwirkte Erhöhungsausmaße der Passagierzahl Erklärungsvariablen sind und Wahrscheinlichkeiten, dass die Vorschläge angenommen werden, objektive Variablen sind;
**dadurch gekennzeichnet, dass** die Arithmetikvorrichtung ausgelegt ist, um:
eine Vielzahl von Verbindungswartezeitplänen für eine Verbindung von einer ersten Beförderung zu einer zweiten Beförderung zu erzeugen;
für jeden der Vielzahl von erzeugten Verbindungswartezeitplänen eine Passagierzahl der zweiten Beförderung zu schätzen;
unter Verwendung des Modells eine Wahrscheinlichkeit zu berechnen, mit der einer der Vielzahl von Verbindungswartezeitplänen angenommen wird;
für jeden aus der Vielzahl von Verbindungswartezeitplänen einen Erwartungswert durch Multiplizieren der Wahrscheinlichkeit mit der der eine der Vielzahl von Verbindungswartezeitplänen angenommen wird, mit einem Erhöhungsausmaß der Passagierzahl der zweiten Beförderung zu berechnen;
einen der Vielzahl von Verbindungswartezeitplänen auszuwählen, der den höchsten berechneten Erwartungswert aufweist; und
einen Vorschlag mit dem ausgewählten der Vielzahl von Verbindungswartezeitplänen an ein Verkehrssteuersystem zu übermitteln.

2. Koordinierungssystem nach Anspruch 1, wobei die Arithmetikvorrichtung ausgelegt ist, um:
eine Zeit vorherzusagen, zu der ein verzögerter Betrieb der ersten Beförderung an einer Haltestelle ankommt;
basierend auf einer Zeitdifferenz zwischen einem geplanten Betriebsdiagramm der ersten Beförderung und einem geplanten Betriebsdiagramm der zweiten Beförderung einen Betrieb der zweiten, einen Anschluss darstellenden Beförderung zu extrahieren; und
die Passagierzahl für einen Fall zu schätzen, in dem der extrahierte Betrieb der zweiten Beförderung nicht auf den verzögerten Betrieb der ersten Beförderung wartet, um einen Anschluss bereitzustellen.

3. Koordinierungssystem nach Anspruch 1, wobei die Arithmetikvorrichtung ausgelegt ist, um in einem Fall, in dem Vielzahl von Routen für die zweite Beförderung existiert, einen Erwartungswert zu berechnen, indem für jede der Vielzahl von Routen eine Multiplizierung durchgeführt wird, bei der die Wahrscheinlichkeit, mit der einer der Vorschläge angenommen wird, mit dem Erhöhungsausmaß der Passagierzahl der zweiten Beförderung multipliziert wird und durch die Multiplizierung für alle der Vielzahl von Routen erhaltene Werte summiert werden.

4. Koordinierungsunterstützungsverfahren zum Erzeugen eines Vorschlages, der die Koordinierung einer Vielzahl von Beförderungen durch ein Koordinierungssystem fördert,
wobei das Koordinierungssystem Folgendes umfasst: eine Arithmetikvorrichtung, die ausgelegt ist, um eine vorgegebene Verarbeitung auszuführen; und eine Speichervorrichtung, auf welche die Arithmetikvorrichtung zugreifen kann,
wobei die Speichervorrichtung ausgelegt ist, um für jeden von Vorschlägen, die eine Verzögerung der Abfahrt eines der Vielzahl von Beförderungen vorschlagen, eine Verzögerungszeit von dem einen der Vorschläge, ein Erhöhungsausmaß der Passagierzahl, das durch die Verzögerung der Abfahrt gemäß einem der Vorschläge erwirkt wird, und Informationen darüber, ob der eine der Vorschläge angenommen wurde, in Verbindung miteinander zu speichern,
wobei das Koordinierungsunterstützungsverfahren folgende Schritte umfasst:
Zusammenfassen, mittels der Arithmetikvorrichtung, der Vorschläge durch Betrieb und Haltestelle in Gruppen;
Erzeugen, mittels der Arithmetikvorrichtung, eines Modells für jede der Gruppen, in dem Verzögerungszeiten der Vorschläge, die eine Verzögerung der Abfahrt einiger der Vielzahl von Beförderungen vorschlagen, und durch eine Verzögerung der Abfahrt gemäß den Vorschlägen erwirkte Erhöhungsausmaße der Passagierzahl Erklärungsvariablen sind und Wahrscheinlichkeiten, dass die Vorschläge angenommen werden, objektive Variablen sind;
**dadurch gekennzeichnet, dass** das Unterstützungsverfahren folgende Schritte umfasst:
Erzeugen, mittels der Arithmetikvorrichtung, einer Vielzahl von Verbindungswartezeitplänen für eine Verbindung von einer ersten Beförderung zu einer zweiten Beförderung;
Schätzen, mittels der Arithmetikvorrichtung, einer Passagierzahl der zweiten Beförderung für jeden der Vielzahl von erzeugten Verbindungswartezeitplänen;
Berechnen, mittels der Arithmetikvorrichtung, einer Wahrscheinlichkeit, mit der einer der Vielzahl von Verbindungswartezeitplänen angenommen wird, unter Verwendung des Modells;
Berechnen, mittels der Arithmetikvorrichtung, eines Erwartungswerts für jeden aus der Vielzahl von Verbindungswartezeitplänen durch Multiplizieren der Wahrscheinlichkeit mit der der eine der Vielzahl von Verbindungswartezeitplänen angenommen wird, mit einem Erhöhungsausmaß der Passagierzahl der zweiten Beförderung;
Auswählen, mittels der Arithmetikvorrichtung, eines der Vielzahl von Verbindungswartezeitplänen, der den höchsten berechneten Erwartungswert aufweist; und
Übermitteln, mittels der Arithmetikvorrichtung, eines Vorschlags mit dem ausgewählten der Vielzahl von Verbindungswartezeitplänen an ein Verkehrssteuersystem.

5. Koordinierungsunterstützungsverfahren nach Anspruch 4, das weiters folgende Schritte umfasst:
Vorhersagen, mittels der Arithmetikvorrichtung, einer Zeit, zu der ein verzögerter Betrieb der ersten Beförderung an einer Haltestelle ankommt;
Extrahieren, mittels der Arithmetikvorrichtung, eines Betriebs der zweiten, einen Anschluss darstellenden Beförderung basierend auf der Zeitdifferenz zwischen einem geplanten Betriebsdiagramm der ersten Beförderung und einem geplanten Betriebsdiagramm der zweiten Beförderung; und
Schätzen, mittels der Arithmetikvorrichtung, der Passagierzahl für einen Fall, in dem der extrahierte Betrieb der zweiten Beförderung nicht auf den verzögerten Betrieb der ersten Beförderung wartet, um einen Anschluss bereitzustellen.

6. Koordinierungsunterstützungsverfahren nach Anspruch 4, das weiters den Schritt des Berechnens, mittels der Arithmetikvorrichtung, wenn eine Vielzahl von Routen für die zweite Beförderung existiert, eines Erwartungswerts, indem für jede der Vielzahl von Routen eine Multiplizierung durchgeführt wird, bei der die Wahrscheinlichkeit, mit der einer der Vorschläge angenommen wird, mit dem Erhöhungsausmaß der Passagierzahl der zweiten Beförderung multipliziert wird und durch die Multiplizierung für alle der Vielzahl von Routen erhaltene Werte summiert werden.

## Revendications

1. Système de coordination pour créer une proposition qui favorise une coordination entre une pluralité de transports, le système de coordination comprenant :
un dispositif arithmétique (11) configuré pour exécuter un traitement donné ; et
un dispositif de stockage (15) accessible au dispositif arithmétique,
le dispositif de stockage étant configuré pour stocker, pour chaque certaine de propositions proposant de retarder le départ d'un certain de la pluralité de transports, un temps de retard de la certaine des propositions, une quantité d'augmentation du nombre de passagers provoquée par le retard du départ conformément à la certaine des propositions, et des informations indiquant si la certaine des propositions a été acceptée, en association les unes avec les autres,
le dispositif arithmétique étant configuré pour :
regrouper les propositions par opération et par arrêt en groupes ;
générer, pour chacun des groupes, un modèle dans lequel les temps de retard des propositions proposant de retarder le départ de certaines de la pluralité de transports, et les quantités d'augmentation du nombre de passagers provoquées par le retard du départ conformément aux propositions sont des variables explicatives, et les probabilités d'acceptation des propositions sont des variables objectives ;
**caractérisé en ce que** le dispositif arithmétique est configuré pour :
créer une pluralité de plans de temps d'attente de connexion pour une connexion du premier transport au second transport ;
estimer, pour chaque certain de la pluralité de plans de temps d'attente de connexion créés, un nombre de passagers du second transport ;
calculer, en utilisant le modèle, une probabilité à laquelle le certain de la pluralité de plans de temps d'attente de connexion est accepté ;
calculer, pour chaque certain de la pluralité de plans de temps d'attente de connexion, une valeur d'attente en multipliant la probabilité à laquelle le certain de la pluralité de plans de temps d'attente de connexion est accepté par une quantité d'augmentation du nombre de passagers du second transport ;
sélectionner un certain de la pluralité de plans de temps d'attente de connexion qui présente la plus grande valeur d'attente calculée ; et
transmettre une proposition du certain sélectionné de la pluralité de plans de temps d'attente de connexion à un système de commande de trafic.

2. Système de coordination selon la revendication 1, dans lequel le dispositif arithmétique est configuré pour :
prédire un temps auquel une opération retardée du premier transport arrive à un arrêt ;
extraire, sur la base d'une différence de temps entre un diagramme d'opération programmé du premier transport et un diagramme de fonctionnement programmé du second transport, une opération du second transport à laquelle se connecter ; et
estimer un nombre de passagers pour un cas dans lequel l'opération extraite du second transport n'attend pas que l'opération retardée du premier transport se connecte.

3. Système de coordination selon la revendication 1, dans lequel le dispositif arithmétique est configuré pour calculer, dans un cas où une pluralité d'itinéraires pour le second transport existent, une valeur d'attente en effectuant, pour chacun de la pluralité d'itinéraires, une multiplication dans laquelle la probabilité d'acceptation de la certaine des propositions est multipliée par la quantité d'augmentation du nombre de passagers du second transport, et en additionnant des valeurs obtenues par la multiplication pour la totalité de la pluralité d'itinéraires.

4. Procédé de support de coordination pour créer une proposition qui favorise une coordination entre une pluralité de transports par l'intermédiaire d'un système de coordination,
le système de coordination incluant : un dispositif arithmétique configuré pour exécuter un traitement donné ; et un dispositif de stockage accessible au dispositif arithmétique,
le dispositif de stockage étant configuré pour stocker, pour chaque certaine de propositions proposant de retarder le départ d'un certain de la pluralité de transports, un temps de retard de la certaine des propositions, une quantité d'augmentation du nombre de passagers provoquée par le retard du départ conformément à la certaine des propositions, et des informations indiquant si la certaine des propositions a été acceptée, en association les unes avec les autres,
le procédé de support de coordination comprenant les étapes consistant à :
regrouper, par l'intermédiaire du dispositif arithmétique, les propositions par opération et par arrêt en groupes ;
générer, par l'intermédiaire du dispositif arithmétique, pour chacun des groupes, un modèle dans lequel des temps de retard des propositions proposant de retarder le départ de certains de la pluralité de transports et les quantités d'augmentation du nombre de passagers provoquées par le retard du départ conformément aux propositions sont des variables explicatives, et les probabilités d'acceptation des propositions sont des variables objectives ;
**caractérisé en ce que** le procédé de support comprend les étapes consistant à :
créer, par l'intermédiaire du dispositif arithmétique, une pluralité de plans de temps d'attente de connexion pour une connexion du premier transport au second transport ;
estimer, par l'intermédiaire du dispositif arithmétique, pour chaque certain de la pluralité de plans de temps d'attente de connexion créés, un nombre de passagers du second transport ; et
calculer, par l'intermédiaire du dispositif arithmétique, en utilisant le modèle, une probabilité à laquelle le certain de la pluralité de plans de temps d'attente de connexion est accepté ;
calculer, par l'intermédiaire du dispositif arithmétique, pour chaque certain de la pluralité de plans de temps d'attente de connexion, une valeur d'attente en multipliant la probabilité à laquelle le certain de la pluralité de plans de temps d'attente de connexion est accepté par une quantité d'augmentation du nombre de passagers du second transport ;
sélectionner, par l'intermédiaire du dispositif arithmétique, un certain de la pluralité de plans de temps d'attente de connexion qui présente la plus grande valeur d'attente calculée ; et
transmettre, par l'intermédiaire du dispositif arithmétique, une proposition du certain sélectionné de la pluralité de plans de temps d'attente de connexion à un système de commande de trafic.

5. Procédé de support de coordination selon la revendication 4, comprenant en outre les étapes consistant à :
prédire, par l'intermédiaire du dispositif arithmétique, un temps auquel une opération retardée du premier transport arrive à un arrêt ;
extraire, par l'intermédiaire du dispositif arithmétique, sur la base d'une différence de temps entre un diagramme d'opération programmé du premier transport et un diagramme d'opération programmé du second transport, une opération du second transport à laquelle se connecter ; et
estimer, par l'intermédiaire du dispositif arithmétique, un nombre de passagers pour un cas dans lequel l'opération extraite du second transport n'attend pas que l'opération retardée du premier transport se connecte.

6. Procédé de support de coordination selon la revendication 4, comprenant en outre l'étape consistant à calculer, par l'intermédiaire du dispositif arithmétique, lorsqu'une pluralité d'itinéraires pour le second transport existent, une valeur d'attente en effectuant, pour chacun de la pluralité d'itinéraires, une multiplication dans laquelle la probabilité d'acceptation de la certaine des propositions est multipliée par la quantité d'augmentation du nombre de passagers du second transport, et en additionnant des valeurs obtenues par la multiplication pour la totalité de la pluralité d'itinéraires.
